# EUROPEAN PATENT SPECIFICATION

(11) **EP 4 261 975 B1**
(45) Date of publication and mention of the grant of the patent: **26.08.2026**
(21) Application number: 22203774.9
(22) Date of filing: 26.10.2022
(51) Int. Cl.: H01M 10/0567, H01M 10/0525, H01M 10/42, H01M 4/525, H01M 4/36, H01M 4/38, H01M 4/587, H01M 10/0569

(54) **RECHARGEABLE LITHIUM BATTERY**
WIEDERAUFLADBARE LITHIUMBATTERIE
BATTERIE RECHARGEABLE AU LITHIUM

(30) Priority: 12.04.2022 KR 20220045330
(43) Date of publication of application: 18.10.2023
(73) Proprietor: Samsung SDI Co., Ltd., Yongin-si, Gyeonggi-do 17084 (KR)
(72) Inventor: CHOI, Hyunbong, 17084 Yongin-si, Gyeonggi-do (KR); YANG, Yeji, 17084 Yongin-si, Gyeonggi-do (KR); PARK, Sangwoo, 17084 Yongin-si, Gyeonggi-do (KR); KIM, Sundae, 17084 Yongin-si, Gyeonggi-do (KR); KIM, Sanghoon, 17084 Yongin-si, Gyeonggi-do (KR); PARK, Hongryeol, 17084 Yongin-si, Gyeonggi-do (KR); KIM, Dahyun, 17084 Yongin-si, Gyeonggi-do (KR)
(74) Representative: Gulde & Partner

(56) References cited:
- EP-A1- 2 746 288
- CN-A- 108 365 265
- CN-A- 108 428 942
- CN-A- 112 382 734
- CN-A- 112 952 057
- KR-A- 20190 123 136
- KR-A- 20200 099 900
- US-A1- 2020 185 773

## Description

### BACKGROUND OF THE INVENTION

### (a) Field of the Invention

This disclosure relates to a rechargeable lithium battery.

### (b) Description of the Related Art

A rechargeable lithium battery may be recharged and has three or more times as high energy density per unit weight as a conventional lead storage battery, nickel cadmium battery, nickel hydrogen battery, nickel zinc battery and the like. The rechargeable lithium battery may be also charged at a high rate and thus, is commercially manufactured for a laptop, a cell phone, an electric tool, an electric bike, and the like, and researches on improvement of additional energy density have been actively made.

In particular, as IT devices become increasingly high-performance, high-capacity batteries are required, wherein the high capacity may be realized by expanding a voltage region to increase energy density, but there is a problem of oxidizing an electrolyte solution in the high voltage region and thus deteriorating performance of a positive electrode.

In particular, cobalt-free lithium nickel manganese-based oxide is a positive active material including not cobalt but nickel, manganese, and the like as a main component in its composition, and accordingly, a positive electrode including the same may be economical and realize high energy density and thus draws attentions as a next generation positive active material.

For example, KR 20190123136 A relates to an electrolyte for lithium secondary batteries and a lithium secondary battery containing the same based on cyclic fluorophosphite compounds, such as 2-fluoro-1,3,2-dioxaphospholane. US 2020/185773 A1 discloses an electrolyte for a secondary battery including a lithium salt, a nonaqueous organic solvent, and a cyclic fluorophosphonate compound, and a lithium secondary battery including the same. The electrolyte further comprises one or two or more additives selected from the group consisting of oxalatoborate-based compounds, oxalatophosphate-based compounds, fluorine-substituted carbonate-based compounds, vinylidene carbonate-based compounds, and sulfinyl group-containing compounds. CN 108 428 942 A describes an electrolyte for a lithium ion secondary battery, wherein the electrolyte contains a non-aqueous organic solvent, lithium salt and an additive and the additive is a six-membered cyclic phosphite compound. CN 108 365 265 A discloses a non-aqueous electrolyte for a lithium-ion battery and the non-aqueous electrolyte comprises a non-aqueous organic solvent, conductive lithium salt and a cyclic phosphate or cyclic phosphite additive. EP 2 746 288 A1 describes an electrolyte additive such as 4-methyl-2-[(2,2,3,3,4,4,5,5-octafluoropentyl)oxy]-1,3,2-dioxaphosphinane and an electrolyte including the electrolyte additive, and a rechargeable lithium battery including the electrolyte. CN 112 952 057 A relates to an high-energy-density cobalt-free lithium ion battery which comprises a positive electrode system, a negative electrode system and an electrolyte, wherein the positive electrode system comprises a high-nickel cobalt-free positive electrode material active substance, a positive electrode conductive agent, a positive electrode binder, a positive electrode adsorbent and a positive electrode current collector, and the positive electrode adsorbent is a carbon adsorbent. CN 112 382 734 A discloses a lithium ion battery positive plate using a cobalt-free high-nickel positive electrode material, and the positive electrode comprises a positive electrode current collector and a positive electrode active substance layer loaded on the positive electrode current collector. KR 2020 0099900 A describes a positive electrode active material for a secondary battery, which is a lithium nickel manganese oxide containing nickel (Ni) and manganese (Mn) and does not contain cobalt (Co), wherein the lithium nickel manganese oxide contains 80 mole% of nickel (Ni) among all metals excluding lithium (Li). The lithium nickel manganese oxide contains at least one selected from the group consisting of Al, Ca, Ga, Zn, In, and Mg as a doping element, and the doping element is contained in an amount of 2-10 mole% of all metals excluding lithium (Li).

However, when the positive electrode including the cobalt-free lithium nickel manganese-based oxide is used in a high voltage environment, transition metals may be eluted due to structural collapse of the positive electrode, thereby causing a problem such as gas generation inside a cell, capacity reduction, and the like. This transition metal elution tends to be aggravated in a high temperature environment, wherein the eluted transition metals are precipitated on the surface of a negative electrode and may cause a side reaction and thereby increase battery resistance and deteriorate battery cycle-life and output characteristics.

Accordingly, when the positive electrode including the cobalt-free lithium nickel manganese-based oxide is used, an electrolyte solution applicable under high voltage and high temperature conditions is required.

### SUMMARY OF THE INVENTION

The invention provides a rechargeable lithium battery exhibiting improved high-voltage characteristics and high-temperature characteristics by combining a positive electrode including cobalt-free lithium nickel manganese-based oxide with an electrolyte solution capable of effectively protecting the positive electrode including cobalt-free lithium nickel manganese-based oxide to reduce elution of transition metals under high voltage and high temperature conditions and thus to suppress structural collapse of the positive electrode.

There is provided a rechargeable lithium battery as defined in claim 1. The rechargeable lithium battery includes an electrolyte solution including a non-aqueous organic solvent, a lithium salt, and an additive; a positive electrode including a positive active material; and a negative electrode including a negative active material;
wherein the additive is a compound represented by Chemical Formula 1, and
the positive active material includes a cobalt-free lithium nickel manganese-based oxide.

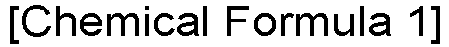

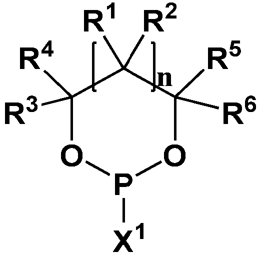

In Chemical Formula 1,
X¹ is a fluoro group, a chloro group, a bromo group, or an iodo group,
R¹ to R⁶ are each independently hydrogen, a cyano group, an isocyanate group, an isothiocyanate group, a halogen-substituted sulfonate group, a sulfonate group substituted with a C1 to C10 alkyl group, a sulfonate group substituted with a C1 to C10 fluoroalkyl group, a substituted or unsubstituted C1 to C20 alkyl group, a substituted or unsubstituted C1 to C20 alkoxy group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C6 to C20 aryl group, or a substituted or unsubstituted C2 to C20 heteroaryl group, and
n is an integer of 0 or 1.

The Chemical Formula 1 may be represented by Chemical Formula 1-1.

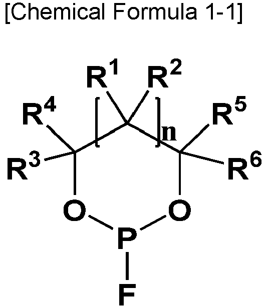

In Chemical Formula 1-1,
R¹ to R⁶ are each independently hydrogen, a cyano group, an isocyanate group, an isothiocyanate group, a halogen-substituted sulfonate group, a sulfonate group substituted with a C1 to C10 alkyl group, a sulfonate group substituted with a C1 to C10 fluoroalkyl group, a substituted or unsubstituted C1 to C20 alkyl group, a substituted or unsubstituted C1 to C20 alkoxy group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C6 to C20 aryl group or a substituted or unsubstituted C2 to C20 heteroaryl group, and
n is an integer of 0 or 1;
wherein "substituted" refers to replacement of hydrogen of a compound by a substituent selected from F, Br, Cl, or I, a hydroxy group, a nitro group, a cyano group, an amino group, an azido group, an amidino group, a hydrazino group, a hydrazono group, a carbonyl group, a carbamyl group, a thiol group, an ester group, a carboxyl group or a salt thereof, a sulfonic acid group or a salt thereof, a phosphoric acid group or a salt thereof, a C1 to C20 alkyl group, a C2 to C20 alkenyl group, a C2 to C20 alkynyl group, a C6 to C30 aryl group, a C7 to C30 arylalkyl group, a C1 to C4 alkoxy group, a C1 to C20 heteroalkyl group, a C3 to C20 heteroarylalkyl group, a C3 to C30 cycloalkyl group, a C3 to C15 cycloalkenyl group, a C6 to C15 cycloalkynyl group, a C2 to C20 heterocycloalkyl group, and a combination thereof.

The Chemical Formula 1-1 may be represented by Chemical Formula 1-1A or Chemical Formula 1-1B.

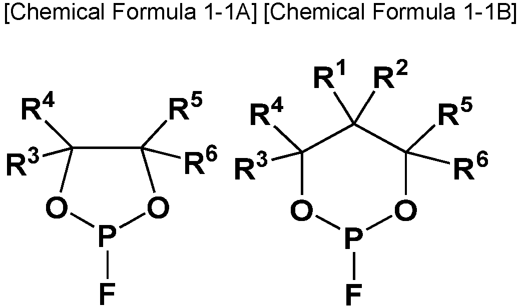

In Chemical Formula 1-1A and Chemical Formula 1-1B,
R¹ to R⁶ are each independently hydrogen, a cyano group, an isocyanate group, an isothiocyanate group, a halogen-substituted sulfonate group, a sulfonate group substituted with a C1 to C5 alkyl group, a sulfonate group substituted with a C1 to C5 fluoroalkyl group, a substituted or unsubstituted C1 to C10 alkyl group, a substituted or unsubstituted C1 to C10 alkoxy group, a substituted or unsubstituted C2 to C10 alkenyl group, or a substituted or unsubstituted C2 to C10 alkynyl group.
R³ and R⁴ of Chemical Formula 1-1A are each hydrogen, and
R⁵ and R⁶ are each hydrogen or at least one of R⁵ and R⁶ may be a cyano group, an isocyanate group, an isothiocyanate group, a halogen-substituted sulfonate group, a sulfonate group substituted with a C1 to C5 alkyl group, a sulfonate group substituted with a C1 to C5 fluoroalkyl group, a substituted or unsubstituted C1 to C10 alkyl group, a substituted or unsubstituted C1 to C10 alkoxy group, a substituted or unsubstituted C2 to C10 alkenyl group, or a substituted or unsubstituted C2 to C10 alkynyl group.

The compound represented by Chemical Formula 1 may be selected from compounds of Group 1.

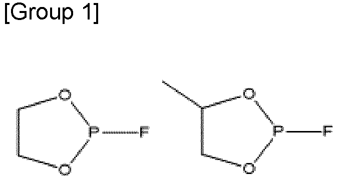

The compound represented by Chemical Formula 1 may be included in an amount of about 0.1 to 5.0 parts by weight based on 100 parts by weight of the electrolyte solution.

The electrolyte may further include at least one of other additives selected from vinylene carbonate (VC), fluoroethylene carbonate (FEC), difluoroethylene carbonate, chloroethylene carbonate, dichloroethylene carbonate, bromoethylene carbonate, dibromoethylene carbonate, nitroethylene carbonate, cyanoethylene carbonate, vinylethylene carbonate (VEC), adiponitrile (AN), succinonitrile (SN), 1,3,6-hexane tricyanide (HTCN), propensultone (PST), propanesultone (PS), lithium tetrafluoroborate (LiBF₄), lithium difluorophosphate (LiPO₂F₂), and 2-fluorobiphenyl (2-FBP).

The non-aqueous organic solvent may consist or comprise a linear alkyl carbonate ( or chain carbonate).

The linear alkyl carbonate may be represented by Chemical Formula 2.

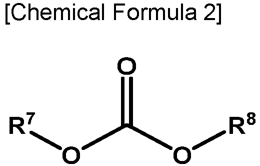

In Chemical Formula 2
R⁷ and R⁸ are each independently a substituted or unsubstituted C1 to C20 alkyl group.

The non-aqueous organic solvent may be a mixed solvent including at least two linear alkyl carbonates selected from the group consisting of dimethyl carbonate (DMC), diethyl carbonate (DEC), dipropyl carbonate (DPC), methylpropyl carbonate (MPC), ethylpropyl carbonate (EPC), and ethylmethyl carbonate (EMC).

The cobalt-free lithium nickel manganese-based oxide may include a lithium composite oxide represented by Chemical Formula 4.

[Chemical Formula 4] LiₐNiₓMn_{y}M1_{z}M2_{w}O_{2-b}X_{b}

In Chemical Formula 4,
0.9 ≤ a < 1.2, 0 ≤ b < 0.1, 0 ≤ w < 0.1, 0.6 ≤ x < 1.0, 0 < y < 0.4, 0 < z < 0.1, w + x + y + z = 1,
M1 is at least one element selected from Al, Mg, Fe, Ti, Zr, Sr, V, W, Mo, Ce, Cr, and Nb, and
M2 is at least one element selected from B, Ba, Ca, and Si, and
X is at least one element selected from S, F, and P.

The Chemical Formula 4 may be represented by Chemical Formula 4-1.

[Chemical Formula 4-1] LiₐNiₓ₁Mn_{y1}Al_{z1}M2_{w1}O_{2-b}X_{b}

In Chemical Formula 4-1,
0.9 ≤ a < 1.2, 0 ≤ b < 0.1, 0 ≤ w1 < 0.1, 0.6 ≤ x1 < 1.0, 0 < y1 < 0.4, 0 < z1 < 0.1, w1 + x1 + y1 + z1 = 1, M2 is at least one element selected from B, Ba, Ca, and Si, and X is at least one element selected from S, F, and P.

In Chemical Formula 4-1, x1 may be 0.6 ≤ x1 ≤ 0.79, y1 may be 0.2 ≤ y1 ≤ 0.39, and z1 may be 0.01 ≤ z1 < 0.1.

The negative active material may include at least one of graphite and Si composite.

The Si composite may include a core including Si-based particles and amorphous carbon coating layer.

The Si-based particles may include at least one of Si particles, a Si-C composite, SiOₓ (0 < x ≤ 2), and a Si alloy.

The rechargeable lithium battery may be operated at a high voltage of about 4.45 V or higher.

An embodiment may realize a rechargeable lithium battery exhibiting improved battery stability and cycle-life characteristics by combining a positive electrode including cobalt-free lithium nickel manganese-based oxide with an electrolyte solution capable of effectively protecting the positive electrode to secure phase transition safety of the positive electrode in a high temperature high voltage environment and to suppress decomposition of the electrolyte solution and a side reaction with electrodes and thus reduce gas generation and simultaneously, suppress an increase in internal battery resistance.

### BRIEF DESCRIPTION OF THE DRAWINGS

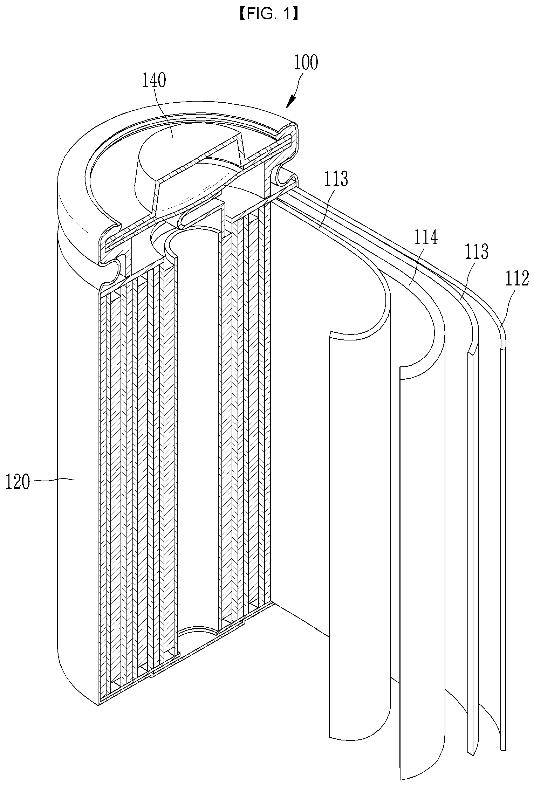

FIG. 1 is a schematic view illustrating a rechargeable lithium battery according to an embodiment of the present invention.

### DETAILED DESCRIPTION OF THE EMBODIMENTS

Hereinafter, a rechargeable lithium battery according to an embodiment of the present disclosure will be described in detail with reference to the accompanying drawings. However, these embodiments are exemplary, the present invention is not limited thereto and the present invention is defined by the scope of claims.

Hereinafter, when a definition is not otherwise provided, "substituted" refers to replacement of hydrogen of a compound by a substituent selected from a halogen atom (F, Br, Cl, or I), a hydroxy group, a nitro group, a cyano group, an amino group, an azido group, an amidino group, a hydrazino group, a hydrazono group, a carbonyl group, a carbamyl group, a thiol group, an ester group, a carboxyl group or a salt thereof, a sulfonic acid group or a salt thereof, a phosphoric acid group or a salt thereof, a C1 to C20 alkyl group, a C2 to C20 alkenyl group, a C2 to C20 alkynyl group, a C6 to C30 aryl group, a C7 to C30 arylalkyl group, a C1 to C4 alkoxy group, a C1 to C20 heteroalkyl group, a C3 to C20 heteroarylalkyl group, a C3 to C30 cycloalkyl group, a C3 to C15 cycloalkenyl group, a C6 to C15 cycloalkynyl group, a C2 to C20 heterocycloalkyl group, and a combination thereof.

A rechargeable lithium battery may be classified into a lithium ion battery, a lithium ion polymer battery, and a lithium polymer battery depending on kinds of a separator and an electrolyte. It also may be classified to be cylindrical, prismatic, coin-type, pouch-type, and the like depending on shape. In addition, it may be bulk type and thin film type depending on sizes. Structures and manufacturing methods for lithium ion batteries pertaining to this disclosure are well known in the art.

Herein, as an example of a rechargeable lithium battery, a cylindrical rechargeable lithium battery is for example described. FIG. 1 schematically shows the structure of a rechargeable lithium battery according to an embodiment. Referring to FIG. 1, a rechargeable lithium battery 100 according to an embodiment includes a battery cell including a positive electrode 114, a negative electrode 112 facing to the positive electrode 114, a separator 113 between the positive electrode 114 and the negative electrode 112, and an electrolyte (not shown) impregnating the positive electrode 114, the negative electrode 112 and the separator 113, a battery case 120 housing the battery cell, and a sealing member 140 for sealing the battery case 120.

Hereinafter, a more detailed configuration of the rechargeable lithium battery 100 according to an embodiment is described.

A rechargeable lithium battery according to an embodiment includes a positive electrode, a negative electrode, and an electrolyte solution.

The electrolyte solution includes a non-aqueous organic solvent, a lithium salt, and an additive, and the additive is a compound represented by Chemical Formula 1.

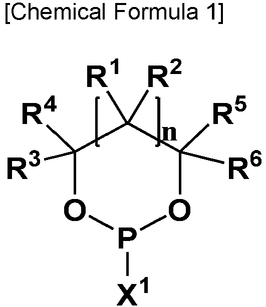

In Chemical Formula 1,
X¹ is a fluoro group, a chloro group, a bromo group, or an iodo group,
R¹ to R⁶ are each independently hydrogen, a cyano group, an isocyanate group, an isothiocyanate group, a halogen-substituted sulfonate group, a sulfonate group substituted with a C1 to C10 alkyl group, a sulfonate group substituted with a C1 to C10 fluoroalkyl group, a substituted or unsubstituted C1 to C20 alkyl group, a substituted or unsubstituted C1 to C20 alkoxy group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C6 to C20 aryl group or a substituted or unsubstituted C2 to C20 heteroaryl group, and
n is an integer of 0 or 1.

The compound represented by Chemical Formula 1 serves to prevent hydrolysis by stabilizing the LiPF₆ salt in the electrolyte solution.

In other words, the compound represented by Chemical Formula 1 may be oxidized on the positive electrode surface and thus form phosphate functional groups, wherein these functional groups may work as an anion receptor to stably form PF₆⁻ and increasingly separate ion pairs of Li⁺ and PF₆⁻, which may improve solubility of LiF inside the electrolyte solution and thus lower interface resistance.

In addition, the compound represented by Chemical Formula 1 may be oxidized and decomposed on the positive electrode surface and thus form a cathode electrolyte interface (CEI) film with high heat resistance, thereby suppressing decomposition of the electrolyte solution even at the high-temperature storage.

In particular, the compound represented by Chemical Formula 1 has a lower oxidation potential than the solvent and thus forms an SEI (solid electrolyte interface) film on the negative electrode surface before the decomposition of the electrolyte solution, thereby suppressing a side reaction with the electrolyte solution and thus improving a swelling phenomenon.

As described above, the effects of suppressing the decomposition of the electrolyte solution and the side reaction with the electrolyte solution are maximized, when used with a positive electrode including cobalt-free lithium nickel manganese-based oxide, which will be described later.

When the additive represented by Chemical Formula 1 and the positive electrode including cobalt-free lithium nickel manganese-based oxide are used as a combination, the transition metal elution under high voltage and high temperature conditions may be effectively reduced, thereby suppressing structural collapse of the positive electrode and improving high-voltage characteristics and high-temperature characteristics of a battery.

The Chemical Formula 1 may be represented by Chemical Formula 1-1.

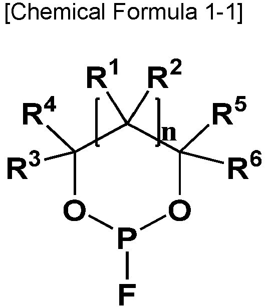

In Chemical Formula 1-1,
R¹ to R⁶ are each independently hydrogen, a cyano group, an isocyanate group, an isothiocyanate group, a halogen-substituted sulfonate group, a sulfonate group substituted with a C1 to C10 alkyl group, a sulfonate group substituted with a C1 to C10 fluoroalkyl group, a substituted or unsubstituted C1 to C20 alkyl group, a substituted or unsubstituted C1 to C20 alkoxy group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C6 to C20 aryl group or a substituted or unsubstituted C2 to C20 heteroaryl group, and
n is an integer of 0 or 1.

The compound represented by Chemical Formula 1-1 has an electron-accepting fluorine substituent directly bonded to the central atom, phosphorus (P(lll)), so that the stability of the CEI film on the surface of the positive electrode may be improved.

For example, Chemical Formula 1-1 may be represented by Chemical Formula 1-1A or Chemical Formula 1-1B.

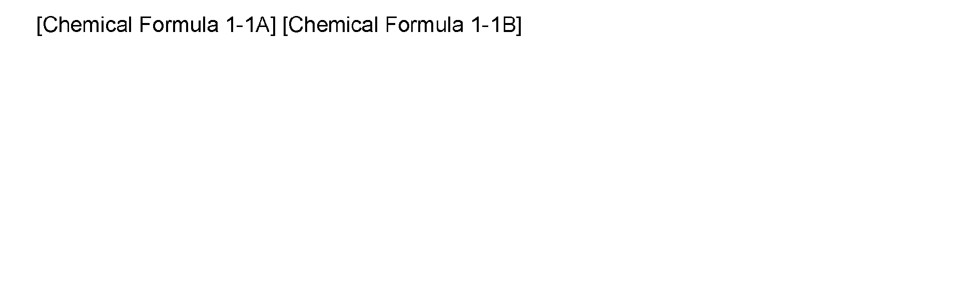

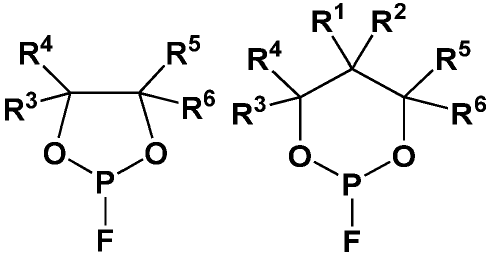

In Chemical Formula 1-1A and Chemical Formula 1-1B,
R¹ to R⁶ are each independently hydrogen, a cyano group, an isocyanate group, an isothiocyanate group, a halogen-substituted sulfonate group, a sulfonate group substituted with a C1 to C5 alkyl group, a sulfonate group substituted with a C1 to C5 fluoroalkyl group, a substituted or unsubstituted C1 to C10 alkyl group, a substituted or unsubstituted C1 to C10 alkoxy group, a substituted or unsubstituted C2 to C10 alkenyl group, or a substituted or unsubstituted C2 to C10 alkynyl group.

As a specific example, R³ and R⁴ of Chemical Formula 1-1A may be each hydrogen, and
R⁵ and R⁶ may be each hydrogen or at least one of R⁵ and R⁶ may be a cyano group, an isocyanate group, an isothiocyanate group, a halogen-substituted sulfonate group, a sulfonate group substituted with a C1 to C5 alkyl group, a sulfonate group substituted with a C1 to C5 fluoroalkyl group, a substituted or unsubstituted C1 to C10 alkyl group, a substituted or unsubstituted C1 to C10 alkoxy group, a substituted or unsubstituted C2 to C10 alkenyl group, or a substituted or unsubstituted C2 to C10 alkynyl group.

As a more specific example, the compound represented by Chemical Formula 1 may be selected from the compounds of Group 1, i.e. at least one selected from 2-fluoro-1,3,2-dioxaphospholane and 2-fluoro-4-methyl-1,3,2-dioxaphospholane.

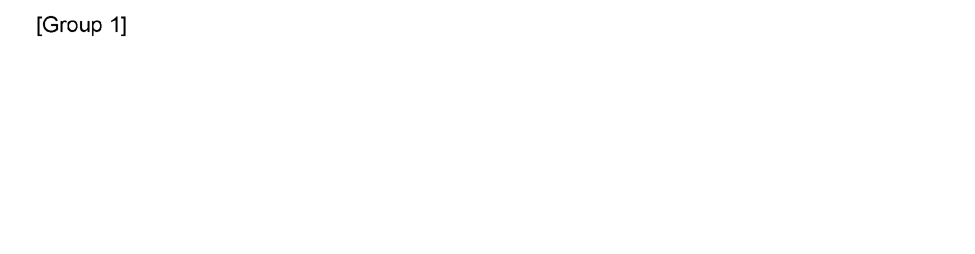

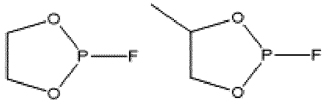

The compound represented by Chemical Formula 1 may be included in an amount of 0.1 to 5.0 parts by weight, for example 0.1 to 3.0 parts by weight, or 0.1 to 2.0 parts by weight based on 100 parts by weight of the electrolyte solution.

When the amount of the compound represented by Chemical Formula 1 is within the above range, a rechargeable lithium battery having improved storage characteristics at a high temperature and cycle-life characteristics may be implemented.

Meanwhile, the electrolyte may further include other additives in addition to the aforementioned compound.

The electrolyte may further include at least one of other additives selected from vinylene carbonate (VC), fluoroethylene carbonate (FEC), difluoroethylene carbonate, chloroethylene carbonate, dichloroethylene carbonate, bromoethylene carbonate, dibromoethylene carbonate, nitroethylene carbonate, cyanoethylene carbonate, vinylethylene carbonate (VEC), adiponitrile (AN), succinonitrile (SN), 1,3,6-hexane tricyanide (HTCN), propensultone (PST), propanesultone (PS), lithium tetrafluoroborate (LiBF₄), lithium difluorophosphate (LiPO₂F₂), and 2-fluorobiphenyl (2-FBP).

By further including the aforementioned other additives, the cycle-life may be further improved or gases generated from the positive electrode and the negative electrode may be effectively controlled during high-temperature storage.

The other additives may be included in an amount of about 0.2 to 20 parts by weight, specifically about 0.2 to 15 parts by weight, or for example, about 0.2 to 10 parts by weight, based on 100 parts by weight of the electrolyte solution for a rechargeable lithium battery.

When the amount of other additives is as described above, the increase in film resistance may be minimized, thereby contributing to the improvement of battery performance.

The non-aqueous organic solvent serves as a medium for transmitting ions taking part in the electrochemical reaction of a battery.

The non-aqueous organic solvent may be a carbonate-based, ester-based, ether-based, ketone-based, alcohol-based, or aprotic solvent.

The carbonate-based solvent may include dimethyl carbonate (DMC), diethyl carbonate (DEC), dipropyl carbonate (DPC), methylpropyl carbonate (MPC), ethylpropyl carbonate (EPC), ethylmethyl carbonate (EMC), ethylene carbonate (EC), propylene carbonate (PC), butylene carbonate (BC), and the like. The ester-based solvent may include methyl acetate, ethyl acetate, n-propyl acetate, t-butyl acetate, methylpropionate, ethyl propionate, propylpropionate, decanolide, mevalonolactone, caprolactone, and the like. The ether-based solvent may include dibutyl ether, tetraglyme, diglyme, dimethoxyethane, 2-methyltetrahydrofuran, tetrahydrofuran, and the like. In addition, the ketone-based solvent may include cyclohexanone, and the like. The alcohol-based solvent may include ethanol, isopropyl alcohol, and the like and the aprotic solvent may include nitriles such as R-CN (wherein R is a hydrocarbon group having a C2 to C20 linear, branched, or cyclic structure and may include a double bond, an aromatic ring, or an ether bond), and the like, dioxolanes such as 1,3-dioxolane, and the like, sulfolanes, and the like.

The non-aqueous organic solvent may be used alone or in a mixture. When the non-aqueous organic solvent is used in a mixture, the mixture ratio may be controlled in accordance with a desirable battery performance.

For example, the non-aqueous organic solvent may be composed of a linear alkyl carbonate alone. In this case, excellent storage characteristics at a high temperature may be realized as a resistance increase rate is significantly reduced during high-temperature storage.

In the present disclosure, the meaning "composed of the linear alkyl carbonate" means that it is not mixed with a cyclic carbonate and includes an organic solvent belonging to a single linear alkyl carbonate alone or a combination of linear alkyl carbonates. Specifically, the non-aqueous organic solvent does not include a cyclic carbonate. In particular, the non-aqueous organic solvent may consist of the linear alkyl carbonate(s).

As a specific example, the linear alkyl carbonate may be represented by Chemical Formula 2.

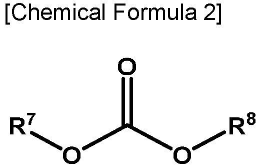

In Chemical Formula 2,
R⁷ and R⁸ are each independently a substituted or unsubstituted C1 to C20 alkyl group.

For example, R⁷ and R⁸ in Chemical Formula 2 may each independently be a substituted or unsubstituted C1 to C10 alkyl group, and for example, R⁷ and R⁸ may each independently represent a substituted or unsubstituted C1 to C5 alkyl group.

In an embodiment, R⁷ and R⁸ in Chemical Formula 2 may each independently be a substituted or unsubstituted methyl group, a substituted or unsubstituted ethyl group, a substituted or unsubstituted n-propyl group, a substituted or unsubstituted n-butyl group, a substituted or unsubstituted n-pentyl group, a substituted or unsubstituted iso-butyl group, or a substituted or unsubstituted neo-pentyl group.

For example, the non-aqueous organic solvent according to a specific embodiment may be a mixed solvent including at least two linear alkyl carbonates selected from the group consisting of dimethyl carbonate (DMC), diethyl carbonate (DEC), dipropyl carbonate (DPC), methylpropyl carbonate (MPC), ethylpropyl carbonate (EPC), and ethylmethyl carbonate (EMC).

The non-aqueous organic solvent according to the more specific embodiment may be a mixed solvent of dimethyl carbonate (DMC) and ethylmethyl carbonate (EMC).

The non-aqueous organic solvent may further include an aromatic hydrocarbon-based organic solvent in addition to the carbonate-based solvent. Herein, the carbonate-based solvent and the aromatic hydrocarbon-based organic solvent may be mixed in a volume ratio of about 1:1 to about 30:1.

The aromatic hydrocarbon-based organic solvent may be an aromatic hydrocarbon-based compound represented by Chemical Formula 3.

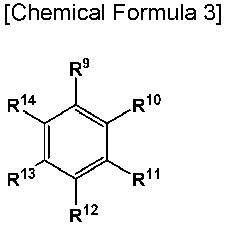

In Chemical Formula 3, R⁹ to R¹⁴ are the same or different and are selected from hydrogen, a halogen, a C1 to C10 alkyl group, a C1 to C10 haloalkyl group, and a combination thereof.

Specific examples of the aromatic hydrocarbon-based organic solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The lithium salt dissolved in the non-aqueous organic solvent supplies lithium ions in a battery, enables a basic operation of a rechargeable lithium battery, and improves transportation of the lithium ions between positive and negative electrodes. Examples of the lithium salt may include at least one selected from LiPF₆, LiBF₄, lithium difluoro(oxalato)borate (LiDFOB), LiPO₂F₂, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide: LiFSI), LiC₄F₉SO₃, LiClO₄, LiAlO₂, LiAlCl₄, LiN(CₓF₂ₓ₊₁SO₂)(C_{y}F_{2y+1}SO₂), (wherein x and y are natural numbers, for example, an integer ranging from 1 to 20), LiCl, Lil, and LiB(C₂O₄)₂ (lithium bis(oxalato)borate: LiBOB). The lithium salt may be used in a concentration ranging from about 0.1 M to about 2.0 M. When the lithium salt is included at the above concentration range, an electrolyte may have excellent performance and lithium ion mobility due to optimal electrolyte conductivity and viscosity.

The positive electrode includes a positive electrode current collector and a positive active material layer formed on the positive electrode current collector, and the positive active material layer includes a positive active material.

The positive active material may include a cobalt-free lithium nickel manganese-based oxide.

In the present disclosure, the cobalt-free lithium nickel manganese-based oxide as a positive active material means a positive active material composed mainly of nickel, manganese, etc. without including cobalt in the composition of the positive active material.

For example, the cobalt-free lithium nickel manganese-based oxide may include at least one type of lithium composite oxides represented by Chemical Formula 4.

[Chemical Formula 4] LiₐNiₓMn_{y}M1_{z}M2_{w}O_{2-b}X_{b}

In Chemical Formula 4,
0.9 ≤ a < 1.2, 0 ≤ b < 0.1, 0 ≤ w < 0.1, 0.6 ≤ x < 1.0, 0 < y < 0.4, 0 < z < 0.1, w + x + y + z = 1,
M1 is at least one element selected from Al, Mg, Fe, Ti, Zr, Sr, V, W, Mo, Ce, Cr, and Nb, and
M2 is at least one element selected from B, Ba, Ca, and Si, and
X is at least one element selected from S, F, and P.

The lithium composite oxides may have a coating layer on the surface, or may be mixed with another lithium composite oxide having a coating layer. The coating layer may include at least one coating element compound selected from an oxide of a coating element, a hydroxide of a coating element, an oxyhydroxide of a coating element, an oxycarbonate of a coating element, and a hydroxy carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating layer may be disposed in a method having no adverse influence on properties of a positive active material by using these elements in the compound. For example, the method may include any coating method (e.g., spray coating, dipping, etc.), but is not illustrated in more detail since it is well-known to those skilled in the related field.

For example, Chemical Formula 4 may be represented by Chemical Formula 4-1.

[Chemical Formula 4-1] LiₐNiₓ₁Mn_{y1}Al_{z1}M2_{w1}O_{2-b}X_{b}

In Chemical Formula 4-1,
0.9 ≤ a < 1.2, 0 ≤ b < 0.1, 0 ≤ w1 < 0.1, 0.6 ≤ x1 < 1.0, 0 < y1 < 0.4, 0 < z1 < 0.1, w1 + x1 + y1 + z1 = 1, M2 is at least one element selected from B, Ba, Ca, and Si, and X is at least one element selected from S, F, and P.

In an embodiment, in Chemical Formula 4-1, 0.6≤x1≤0.9, 0.1≤y1≤0.4, and 0≤z1≤0.1, or 0.6≤x1≤0.8, 0.2≤y1≤0.4, and 0≤z1≤ 0.1.

For example, in Chemical Formula 4-1, x1 may be 0.6 ≤ x1 ≤ 0.79, y1 may be 0.2 ≤ y1 ≤ 0.39, and z1 may be 0.01 ≤ z1 < 0.1.

The positive active material may be included in an amount of about 90 wt% to about 98 wt% based on the total weight of the positive active material layer.

In an embodiment, the positive active material layer may include a binder. In this case, an amount of the binder may be about 1 wt% to about 5 wt% based on the total weight of the positive active material layer.

The binder improves binding properties of positive active material particles with one another and with a current collector. Examples thereof may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but is not limited thereto.

Al may be used as the positive electrode current collector, but is not limited thereto.

The negative electrode includes a negative current electrode collector and a negative active material layer including a negative active material formed on the negative electrode current collector.

The negative active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include a carbon material. The carbon material may be any generally-used carbon-based negative active material in a rechargeable lithium battery. Examples thereof may be crystalline carbon, amorphous carbon, or a mixture thereof. The crystalline carbon may be non-shaped, or sheet, flake, spherical, or fiber shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be Si, Si-C composite, SiOₓ (0 < x < 2), a Si-Q alloy wherein Q is an element selected from an alkali metal, an alkaline-earth metal, a Group 13 element, a Group 14 element excluding Si, a Group 15 element, a Group 16 element, a transition metal, a rare earth element, and a combination thereof, Sn, SnO₂, a Sn-R alloy (wherein R is an element selected from an alkali metal, an alkaline-earth metal, a Group 13 element, a Group 14 element excluding Sn, a Group 15 element, a Group 16 element, a transition metal, a rare earth element, and a combination thereof), and the like. At least one of these materials may be mixed with SiO₂. The elements Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn (excluded for R), In, TI, Ge, P, As, Sb, Bi, S, Se, Te, Po, and a combination thereof.

The transition metal oxide may be vanadium oxide, lithium vanadium oxide, or lithium titanium oxide.

In an embodiment, the negative active material may include at least one of graphite and a Si composite.

The Si composite may include a core including Si-based particles and amorphous carbon coating layer.

The Si-based particles may include at least one of Si particles, a Si-C composite, SiOₓ (0 < x ≤ 2), and a Si alloy.

The central portion of the core including Si-based particles may include voids, and a radius of the central portion may correspond to about 30% to about 50% of the radius of the Si composite, an average particle diameter of the Si composite may be about 5 µm to 20 µm, and an average particle diameter of the Si-based particles may be about 10 nm to about 200 nm.

In the present disclosure, the average particle diameter may be a particle size (D50) at 50% by volume in a cumulative size-distribution curve. For example, the average particle diameter may be, for example, a median diameter (D50) measured utilizing a laser diffraction particle diameter distribution meter.

When the Si-based particles have an average particle diameter within the range, volume expansion during the charge and discharge may be suppressed, and interruption of a conductive path due to particle crushing during the charge and discharge may be prevented.

The core including Si-based particles may further include amorphous carbon, in this case the central portion does not include amorphous carbon, and the amorphous carbon may be present only on the surface portion of the Si composite.

Herein, the surface portion refers to a region from the outermost surface of the center portion to the outermost surface of the Si composite.

In addition, the Si particles are substantially uniformly included in the negative active material as a whole, that is, may be present in a substantially uniform concentration in the center portion and the surface portion.

The amorphous carbon may be soft carbon, hard carbon, a mesophase pitch carbonized product, calcined coke, or a combination thereof.

For example, the Si-C composite may include a core including Si particles and a crystalline carbon.

The Si particles may be included in a weight of about 1 to 60 wt%, specifically about 3 to 60 wt% of the total weight of the Si-C composite.

The crystalline carbon may be, for example graphite, specifically natural graphite, artificial graphite, or a mixture thereof.

The average particle diameter of the crystalline carbon may be about 5 µm to 30 µm.

The amorphous carbon precursor (e.g., for the amorphous carbon included in the Si-C composite) may include a coal-based pitch, mesophase pitch, petroleum-based pitch, coal-based oil, petroleum-based heavy oil, and/or a polymer resin such as a phenol resin, a furan resin, and/or a polyimide resin.

When the negative active material includes the Si composite and the graphite together, the Si composite and the graphite may be included as a mixture, wherein the Si composite and the graphite may be included in a weight ratio of about 1 : 99 to about 50 : 50. Specifically, the Si composite and the graphite may be included in a weight ratio of about 3 : 97 to about 20 : 80 or about 5 : 95 to about 20 : 80.

In the negative active material layer, the negative active material may be included in an amount of about 95 wt% to about 99 wt% based on a total weight of the negative active material layer.

In an embodiment of the present invention, the negative active material layer includes a binder, and optionally a conductive material. In the negative active material layer, a content of the binder may be about 1 wt% to about 5 wt% based on a total weight of the negative active material layer. When the negative active material layer includes a conductive material, the negative active material layer includes about 90 wt% to about 98 wt% of the negative active material, about 1 wt% to about 5 wt% of the binder, and about 1 wt% to about 5 wt% of the conductive material.

The binder improves binding properties of negative active material particles with one another and with a negative electrode current collector. The binder includes a non-water-soluble binder, a water-soluble binder, or a combination thereof.

The non-water-soluble binder may be selected from polyvinylchloride, carboxylated polyvinylchloride, polyvinylfluoride, polyurethane, polytetrafluoroethylene, polyvinylidene fluoride, polyethylene, polypropylene, polyamideimide, polyimide, or a combination thereof.

The water-soluble binder may be a rubber-based binder or a polymer resin binder. The rubber-based binder may be selected from a styrene-butadiene rubber, an acrylated styrene-butadiene rubber (SBR), an acrylonitrile-butadiene rubber, an acrylic rubber, a butyl rubber, a fluorine rubber, and a combination thereof. The polymer resin binder may be selected from polytetrafluoroethylene, ethylene-propylene copolymer, polyethyleneoxide, polyvinylpyrrolidone, polyepichlorohydrine, polyphosphazene, polyacrylonitrile, polystyrene, an ethylene-propylene-diene copolymer, polyvinylpyridine, chlorosulfonated polyethylene, latex, a polyester resin, an acrylic resin, a phenolic resin, an epoxy resin, polyvinyl alcohol, and a combination thereof.

When the water-soluble binder is used as a negative electrode binder, a cellulose-based compound as a thickener may be further used to provide viscosity. The cellulose-based compound includes one or more of carboxymethyl cellulose, hydroxypropylmethyl cellulose, methyl cellulose, and alkali metal salts thereof. The alkali metals may be Na, K, or Li. Such a thickener may be included in an amount of about 0.1 to about 3 parts by weight based on 100 parts by weight of the negative active material.

The conductive material is included to provide electrode conductivity. Any electrically conductive material may be used as a conductive material unless it causes a chemical change. Examples of the conductive material include a carbon-based material such as natural graphite, artificial graphite, carbon black, acetylene black, ketjen black, a carbon fiber, and the like; a metal-based material of a metal powder or a metal fiber including copper, nickel, aluminum silver, and the like; a conductive polymer such as a polyphenylene derivative; or a mixture thereof.

The negative electrode current collector may include one selected from a copper foil, a nickel foil, a stainless steel foil, a titanium foil, a nickel foam, a copper foam, a polymer substrate coated with a conductive metal, and a combination thereof.

The rechargeable lithium battery may further include a separator between the negative electrode and the positive electrode, depending on a type of the rechargeable lithium battery. Examples of a suitable separator material include polyethylene separator, polypropylene separator, polyvinylidene fluoride separator, or multi-layers thereof such as a polyethylene/polypropylene double-layered separator, a polyethylene/polypropylene/polyethylene triple-layered separator, and a polypropylene/polyethylene/polypropylene triple-layered separator.

The rechargeable lithium battery may be operated even at a voltage of about 4.45V or higher. For example, a range of about 4.45 V to about 4.55 V based on the positive electrode is more desirable than voltages less than 4.45 V.

Hereinafter, examples of the present invention and comparative examples are described. These examples, however, are not in any sense to be interpreted as limiting the scope of the invention.

### Manufacture of Rechargeable Lithium Battery Cell

### Example 1

LiNi_{0.75}Mn_{0.23}Al_{0.02}O₂ as a positive active material, polyvinylidene fluoride as a binder, and acetylene black as a conductive material were mixed in a weight ratio of 96:3:1 and then, dispersed in N-methyl pyrrolidone, preparing positive active material slurry.

The positive active material slurry was coated on a 15 µm-thick Al foil, dried at 100 °C, and pressed, manufacturing a positive electrode.

Negative active material slurry was also prepared by using a mixture of artificial graphite and Si composite in a weight ratio of 93:7 as a negative active material and then, mixing the negative active material, a styrene-butadiene rubber binder, and carboxylmethyl cellulose in a weight ratio of 98:1:1 and dispersing the obtained mixture in distilled water.

As for the Si composite, a core including artificial graphite and silicon particles was coated with coal-based pitch on the surface.

The negative active material slurry was coated on a 10µm-thick Cu foil, dried at 100 °C, and pressed, manufacturing a negative electrode.

The manufactured positive and negative electrodes were assembled with a 10µm-thick polyethylene separator to manufacture an electrode assembly, and an electrolyte solution was injected thereinto, manufacturing a rechargeable lithium battery cell.

The electrolyte solution had a following composition.

### (Composition of electrolyte solution)

Lithium Salt: LiPF₆ 1.5 M
Non-aqueous Organic Solvent: ethylene carbonate: ethylmethyl carbonate: dimethyl carbonate (EC:EMC:DMC = a volume ratio of 20:10:70)
Additive: 0.25 parts by weight of 2-fluoro-4-methyl-1,3,2-dioxaphospholane, 10 parts by weight of fluoroethylene carbonate (FEC), and 0.5 parts by weight of succinonitrile (SN)
In the above composition of the electrolyte solution, "parts by weight" means the relative weight of the additives based on 100 weight of the total electrolyte solution excluding the additives (i.e. lithium salt + non-aqueous organic solvent).

### Examples 2 and 3

Rechargeable lithium battery cells were manufactured in substantially the same manner as in Example 1 except that the content of the additive (i.e., 2-fluoro-4-methyl-1,3,2-dioxaphospholane) was changed respectively into 0.5 parts by weight and 1.0 parts by weight.

### Examples 4 to 6

Rechargeable lithium battery cells were manufactured in substantially the same manner as in Examples 1 to 3 except that the electrolyte solution was prepared by changing the volume ratio of ethylmethyl carbonate (EMC) : dimethyl carbonate (DMC) into 60:40.

### Comparative Example 1

A rechargeable lithium battery cell was manufactured in substantially the same manner as in Example 1 except that an electrolyte solution including no 2-fluoro-4-methyl-1,3,2-dioxaphospholane was used.

### Comparative Example 2

A rechargeable lithium battery cell was manufactured in substantially the same manner as in Example 1 except that the positive active material was changed into LiCoO₂.

### Comparative Examples 3 to 5

Rechargeable lithium battery cells were manufactured in substantially the same manner as in Examples 4 to 6 except that the positive active material was changed into LiCoO₂, and the electrolyte solution was prepared by changing the content of the additive (i.e., 2-fluoro-4-methyl-1,3,2-dioxaphospholane) respectively into 0.25 parts by weight, 0.5 parts by weight, and 1.0 parts by weight.

### Evaluation 1: Evaluation of storage characteristics at high temperature

The rechargeable lithium battery cells according to Examples 1 to 6 and Comparative Examples 1 to 5 were measured with respect to initial DC resistance (DCIR) as △V/△I (voltage change/current change), then, DC resistance thereof was measured again by setting a maximum energy state inside the rechargeable lithium battery cells to a fully charged state (SOC 100%) and then, storing them at a high temperature of 60 °C for 30 days to calculate a DCIR increase rate (%) according to Equation 1, and the results are shown in Tables 1 and 2.$DCIR increase rate = \left\{DCIR after 30 days / initial DCIR\right\} \times 100 %$

### Evaluation 2: Evaluation of high temperature cycle-life characteristics

The rechargeable lithium battery cells according to Examples 1 to 6 and Comparative Example 1 were once charged and discharged at 0.2 C and then, measured with respect to charge and discharge capacity (before stored at a high temperature).

In addition, the rechargeable lithium battery cells according to Examples 1 to 6 and Comparative Example 1 were stored at 60 °C for 30 days after charged at SOC 100% (a state of being charged to 100% of charge capacity based on 100% of total battery charge capacity) and then, discharged to 3.0 V under a constant current condition of 0.2 C and measured with respect to initial discharge capacity.

Subsequently, discharge capacity thereof was measured again by recharging the cells to 4.4 V under the constant current condition of 0.2 C and at a termination current of 0.05 C under the constant voltage condition and discharging them to 3.0 V at 0.2 C. A ratio of the discharge capacity to the initial discharge capacity is shown as a capacity retention rate (%, retention) in Table 1.

### Evaluation 3: Measurement of gas generation after high-temperature storage

The rechargeable lithium battery cells according to Examples 4 to 6 and Comparative Example 1 were allowed to stand at 60 °C for 7 days, and then, refinery gas analysis (RGA) was used to measure gas generation amounts (ml) at the 1^{st} day and the 7^{th} day, and the results are shown in Table 3.

**(Table 1)**

| | Initial DCIR (mOhm) | DCIR after high-temperature storage (mOhm) | DCIR Increase rate (60 °C, 30 days) (%) | Capacity retention rate (%) |
|---|---|---|---|---|
| Comparative Example 1 | 42.29 | 51.59 | 122 | 85.3 |
| Example 1 | 42.35 | 49.97 | 118 | 86.5 |
| Example 2 | 42.59 | 49.40 | 116 | 89.2 |
| Example 3 | 42.69 | 50.80 | 119 | 88.9 |
| Example 4 | 42.28 | 45.66 | 108 | 88.2 |
| Example 5 | 42.35 | 44.89 | 106 | 90.6 |
| Example 6 | 42.45 | 46.27 | 109 | 90.2 |

Referring to Table 1, in the compositions according to the present invention in which the additive was combined with a Co-free positive active material, the DC-IR increase rate at the high temperature storage was reduced, which means that storage characteristics at a high temperature were improved, and the retention capacity was increased, which means that high temperature cycle-life characteristics were also improved.

In particular, the aforementioned storage characteristics at a high temperature was further maximized in a non-aqueous organic solvent composed of linear alkyl carbonate.

**(Table 2)**

| Positive active material | | Initial DCIR (mOh m) | DCIR after high temperature storage (mOhm) | DCIR Increase rate (60 °C, 30 days) (%) | Relative value (%) |
|---|---|---|---|---|---|
| LiNi_{0.75}Mn_{0.23} Al_{0.02}O₂ | Comparative Example 1 | 42.29 | 51.59 | 122 | 100 |
| | Example 4 | 42.28 | 45.66 | 108 | 88.5 |
| | Example 5 | 42.35 | 44.89 | 106 | 86.9 |
| | Example 6 | 42.45 | 46.27 | 109 | 89.3 |
| LiCoO₂ | Comparative Example 2 | 41.25 | 52.38 | 126 | 100 |
| | Comparative Example 3 | 42.01 | 53.21 | 126 | 100 |
| | Comparative Example 4 | 42.05 | 52.49 | 124 | 98.4 |
| | Comparative Example 5 | 42.07 | 52.36 | 124 | 98.4 |

Referring to Table 2, the rechargeable lithium battery cells using the compositions in which the additive was combined with the Co-free positive active material exhibited a significantly decreased DC-IR increase rate at the high temperature storage and thus significantly improved storage characteristics at a high temperature, compared with the rechargeable lithium battery cell using the composition in which a LiCoO₂ positive active material was combined.

**(Table 3)**

| | Gas generation after storage at high temperature (60 °C) | | |
|---|---|---|---|
| | 1 day (mL) | 7 days (mL) | Increase rate (%) |
| Comparative Example 1 | 0.031 | 0.076 | 145 |
| Example 4 | 0.021 | 0.040 | 90 |
| Example 5 | 0.022 | 0.038 | 72 |
| Example 6 | 0.022 | 0.036 | 64 |

Referring to Table 3, in the rechargeable lithium battery cells using the compositions in which the Co-free positive active material was combined, the gas generation amounts after the storage at a high temperature were significantly reduced.

While this invention has been described in connection with what is presently considered to be practical example embodiments, it is to be understood that the invention is not limited to the disclosed embodiments.

## Claims

1. A rechargeable lithium battery (100), comprising
an electrolyte solution including a non-aqueous organic solvent, a lithium salt, and an additive;
a positive electrode (114) including a positive active material; and
a negative electrode (112) including a negative active material,
wherein the additive is a compound represented by Chemical Formula 1, and the positive active material includes a cobalt-free lithium nickel manganese-based oxide: 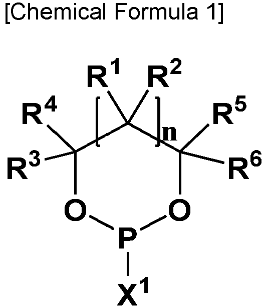
wherein, in Chemical Formula 1,
X¹ is a fluoro group, a chloro group, a bromo group, or an iodo group,
R¹ to R⁶ are each independently hydrogen, a cyano group, an isocyanate group, an isothiocyanate group, a halogen-substituted sulfonate group, a sulfonate group substituted with a C1 to C10 alkyl group, a sulfonate group substituted with a C1 to C10 fluoroalkyl group, a substituted or unsubstituted C1 to C20 alkyl group, a substituted or unsubstituted C1 to C20 alkoxy group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C6 to C20 aryl group or a substituted or unsubstituted C2 to C20 heteroaryl group, and
n is an integer of 0 or 1;
wherein "substituted" refers to replacement of hydrogen of a compound by a substituent selected from F, Br, Cl, or I, a hydroxy group, a nitro group, a cyano group, an amino group, an azido group, an amidino group, a hydrazino group, a hydrazono group, a carbonyl group, a carbamyl group, a thiol group, an ester group, a carboxyl group or a salt thereof, a sulfonic acid group or a salt thereof, a phosphoric acid group or a salt thereof, a C1 to C20 alkyl group, a C2 to C20 alkenyl group, a C2 to C20 alkynyl group, a C6 to C30 aryl group, a C7 to C30 arylalkyl group, a C1 to C4 alkoxy group, a C1 to C20 heteroalkyl group, a C3 to C20 heteroarylalkyl group, a C3 to C30 cycloalkyl group, a C3 to C15 cycloalkenyl group, a C6 to C15 cycloalkynyl group, a C2 to C20 heterocycloalkyl group, and a combination thereof.

2. The rechargeable lithium battery of claim 1, wherein
Chemical Formula 1 is represented by Chemical Formula 1-1: 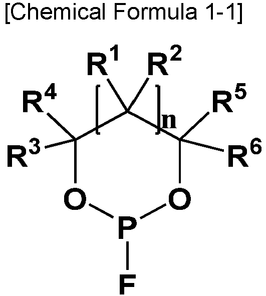
wherein, in Chemical Formula 1-1,
R¹ to R⁶ are each independently hydrogen, a cyano group, an isocyanate group, an isothiocyanate group, a halogen-substituted sulfonate group, a sulfonate group substituted with a C1 to C10 alkyl group, a sulfonate group substituted with a C1 to C10 fluoroalkyl group, a substituted or unsubstituted C1 to C20 alkyl group, a substituted or unsubstituted C1 to C20 alkoxy group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C6 to C20 aryl group or a substituted or unsubstituted C2 to C20 heteroaryl group, and
n is an integer of 0 or 1,
wherein "substituted" has the same meaning as defined in claim 1.

3. The rechargeable lithium battery of claim 2, wherein
Chemical Formula 1-1 is represented by Chemical Formula 1-1A or Chemical Formula 1-1B: 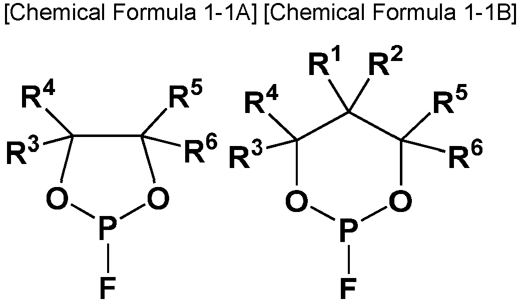
wherein, in Chemical Formula 1-1A and Chemical Formula 1-1B,
R¹ to R⁶ are each independently hydrogen, a cyano group, an isocyanate group, an isothiocyanate group, a halogen-substituted sulfonate group, a sulfonate group substituted with a C1 to C5 alkyl group, a sulfonate group substituted with a C1 to C5 fluoroalkyl group, a substituted or unsubstituted C1 to C10 alkyl group, a substituted or unsubstituted C1 to C10 alkoxy group, a substituted or unsubstituted C2 to C10 alkenyl group, or a substituted or unsubstituted C2 to C10 alkynyl group,
wherein "substituted" has the same meaning as defined in claim 1.

4. The rechargeable lithium battery of claim 3, wherein
R³ and R⁴ of Chemical Formula 1-1A are each hydrogen, and
R⁵ and R⁶ are each hydrogen or at least one of R⁵ and R⁶ is a cyano group, an isocyanate group, an isothiocyanate group, a halogen-substituted sulfonate group, a sulfonate group substituted with a C1 to C5 alkyl group, a sulfonate group substituted with a C1 to C5 fluoroalkyl group, a substituted or unsubstituted C1 to C10 alkyl group, a substituted or unsubstituted C1 to C10 alkoxy group, a substituted or unsubstituted C2 to C10 alkenyl group, or a substituted or unsubstituted C2 to C10 alkynyl group,
wherein "substituted" has the same meaning as defined in claim 1.

5. The rechargeable lithium battery of claim 1, wherein
the compound represented by Chemical Formula 1 is at least one selected from compounds of Group 1:

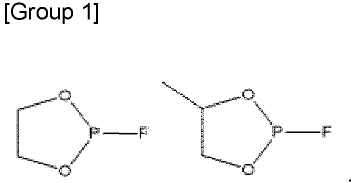

6. The rechargeable lithium battery of any one of the proceeding claims, wherein
the compound represented by Chemical Formula 1 is included in an amount of 0.1 to 5.0 parts by weight based on 100 parts by weight of the electrolyte solution excluding the additive.

7. The rechargeable lithium battery of any one of the proceeding claims, wherein
the additive further includes at least one of other additives selected from vinylene carbonate (VC), fluoroethylene carbonate (FEC), difluoroethylene carbonate, chloroethylene carbonate, dichloroethylene carbonate, bromoethylene carbonate, dibromoethylene carbonate, nitroethylene carbonate, cyanoethylene carbonate, vinylethylene carbonate (VEC), adiponitrile (AN), succinonitrile (SN), 1,3,6-hexane tricyanide (HTCN), propensultone (PST), propanesultone (PS), lithium tetrafluoroborate (LiBF₄), lithium difluorophosphate (LiPO₂F₂), and 2-fluorobiphenyl (2-FBP).

8. The rechargeable lithium battery of any one of the proceeding claims, wherein
the non-aqueous organic solvent does not include a cyclic carbonate.

9. The rechargeable lithium battery of any one of the proceeding claims, wherein
the non-aqueous solvent comprises or consists of a linear alkyl carbonate represented by Chemical Formula 2: 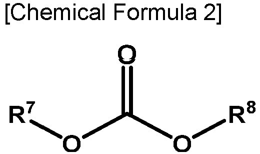
wherein, in Chemical Formula 2
R⁷ and R⁸ are each independently a substituted or unsubstituted C1 to C20 alkyl group,
wherein "substituted" has the same meaning as defined in claim 1.

10. The rechargeable lithium battery of claim 9, wherein
the non-aqueous organic solvent is a mixed solvent including at least two linear alkyl carbonates selected from the group consisting of dimethyl carbonate (DMC), diethyl carbonate (DEC), dipropyl carbonate (DPC), methylpropyl carbonate (MPC), ethylpropyl carbonate (EPC), and ethylmethyl carbonate (EMC).

11. The rechargeable lithium battery of any one of the proceeding claims, wherein the cobalt-free lithium nickel manganese-based oxide includes a lithium composite oxide represented by Chemical Formula 4:
[Chemical Formula 4] LiₐNiₓMn_{y}M1_{z}M2_{w}O_{2-b}X_{b}
wherein, in Chemical Formula 4,
0.9 ≤ a < 1.2, 0 ≤ b < 0.1, 0 ≤ w < 0.1, 0.6 ≤ x < 1.0, 0 < y < 0.4, 0 < z < 0.1, w + x + y + z = 1,
M1 is at least one element selected from Al, Mg, Fe, Ti, Zr, Cr, Sr, V, W, Mo, Ce, and Nb,
M2 is at least one element selected from B, Ba, Ca, and Si, and
X is at least one element selected from S, F, and P.

12. The rechargeable lithium battery of claim 11, wherein
Chemical Formula 4 is represented by Chemical Formula 4-1:
[Chemical Formula 4-1] LiₐNiₓ₁Mn_{y1}Al_{z1}M2_{w1}O_{2-b}X_{b}
wherein, in Chemical Formula 4-1,
0.9 ≤ a < 1.2, 0 ≤ b < 0.1, 0 ≤ w1 < 0.1, 0.6 ≤ x1 < 1.0, 0 < y1 < 0.4, 0 < z1 < 0.1, w1 + x1 + y1 + z1 = 1, M2 is at least one element selected from B, Ba, Ca, and Si, X is at least one element selected from S, F, and P.

13. The rechargeable lithium battery of claim 12, wherein
in Chemical Formula 4-1, x1 is 0.6 ≤ x1 ≤ 0.79, y1 is 0.2 ≤ y1 ≤ 0.39, and z1 is 0.01 ≤ z1 < 0.1.

14. The rechargeable lithium battery of any one of the proceeding claims, wherein
the negative active material includes at least one of graphite and Si composite.

15. The rechargeable lithium battery of claim 14, wherein
the Si composite includes a core including Si-based particles and amorphous carbon coating layer.

## Patentansprüche

1. Wiederaufladbare Lithiumbatterie (100), umfassend
eine Elektrolytlösung, die ein nicht wässriges organisches Lösungsmittel, ein Lithiumsalz und ein Additiv beinhaltet;
eine positive Elektrode (114), die eine positives Aktivmaterial beinhaltet; und
eine negative Elektrode (112), die ein negatives Aktivmaterial beinhaltet,
wobei das Additiv eine durch die chemische Formel 1 dargestellte Verbindung ist, und
das positive Aktivmaterial ein kobaltfreies Lithium-Nickel-Mangan-basiertes Oxid beinhaltet: 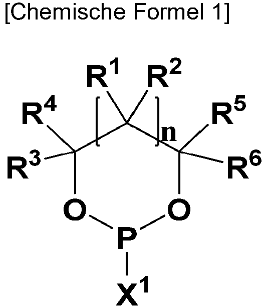
wobei in der chemischen Formel 1
X¹ für eine Fluorgruppe, eine Chlorgruppe, eine Bromgruppe oder eine lodgruppe steht,
R¹ bis R⁶ jeweils unabhängig für Wasserstoff, eine Cyanogruppe, eine Isocyanatgruppe, eine Isothiocyanatgruppe, eine halogensubstituierte Sulfonatgruppe, eine mit einer C1- bis C10-Alkylgruppe substituierte Sulfonatgruppe, eine mit einer C1- bis C10-Fluoralkylgruppe substituierte Sulfonatgruppe, eine substituierte oder unsubstituierte C1- bis C20-Alkylgruppe, eine substituierte oder unsubstituierte C1- bis C20-Alkoxygruppe, eine substituierte oder unsubstituierte C2- bis C20-Alkenylgruppe, eine substituierte oder unsubstituierte C2- bis C20-Alkinylgruppe, eine substituierte oder unsubstituierte C3- bis C20-Cycloalkylgruppe, eine substituierte oder unsubstituierte C6- bis C20-Arylgruppe oder eine substituierte oder unsubstituierte C2- bis C20-Heteroarylgruppe steht, und
n für eine ganze Zahl von 0 oder 1 steht;
wobei sich der Begriff "substituiert" auf den Ersatz von Wasserstoff einer Verbindung durch einen Substituenten bezieht, der ausgewählt ist aus F, Br, Cl oder I, einer Hydroxygruppe, einer Nitrogruppe, einer Cyanogruppe, einer Aminogruppe, einer Azidogruppe, einer Amidinogruppe, einer Hydrazinogruppe, einer Hydrazonogruppe, einer Carbonylgruppe, einer Carbamylgruppe, einer Thiolgruppe, einer Estergruppe, einer Carboxylgruppe oder einem Salz davon, einer Sulfonsäuregruppe oder einem Salz davon, einer Phosphorsäuregruppe oder einem Salz davon, einer C1- bis C20-Alkylgruppe, einer C2-bis C20-Alkenylgruppe, einer C2- bis C20-Alkinylgruppe, einer C6- bis C30-Arylgruppe, einer C7- bis C30-Arylalkylgruppe, einer C1- bis C4-Alkoxygruppe, einer C1- bis C20-Heteroalkylgruppe, einer C3- bis C20-Heteroarylalkylgruppe, einer C3- bis C30-Cycloalkylgruppe, einer C3- bis C15-Cycloalkenylgruppe, einer C6- bis C15-Cycloalkinylgruppe, einer C2- bis C20-Heterocycloalkylgruppe und einer Kombination davon.

2. Wiederaufladbare Lithiumbatterie nach Anspruch 1, wobei
die chemische Formel 1 durch die chemische Formel 1-1 dargestellt ist: 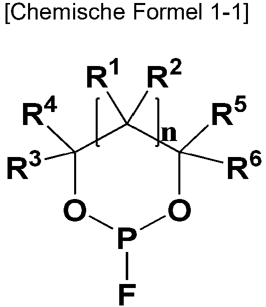
wobei in der chemischen Formel 1-1
R¹ bis R⁶ jeweils unabhängig für Wasserstoff, eine Cyanogruppe, eine Isocyanatgruppe, eine Isothiocyanatgruppe, eine halogensubstituierte Sulfonatgruppe, eine mit einer C1- bis C10-Alkylgruppe substituierte Sulfonatgruppe, eine mit einer C1- bis C10-Fluoralkylgruppe substituierte Sulfonatgruppe, eine substituierte oder unsubstituierte C1- bis C20-Alkylgruppe, eine substituierte oder unsubstituierte C1- bis C20-Alkoxygruppe, eine substituierte oder unsubstituierte C2- bis C20-Alkenylgruppe, eine substituierte oder unsubstituierte C2- bis C20-Alkinylgruppe, eine substituierte oder unsubstituierte C3- bis C20-Cycloalkylgruppe, eine substituierte oder unsubstituierte C6- bis C20-Arylgruppe oder eine substituierte oder unsubstituierte C2- bis C20-Heteroarylgruppe steht, und
n eine ganze Zahl von 0 oder 1 ist,
wobei "substituiert" dieselbe Bedeutung aufweist, wie sie in Anspruch 1 definiert ist.

3. Wiederaufladbare Lithiumbatterie nach Anspruch 2, wobei
die chemische Formel 1-1 durch die chemische Formel 1-1A oder die chemische Formel 1-1B dargestellt ist: 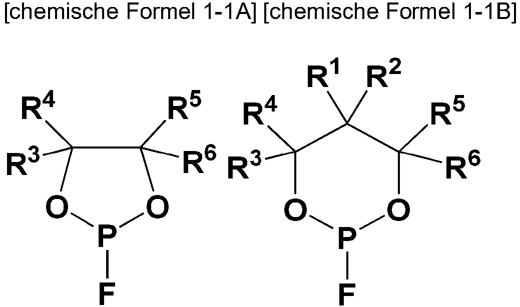
wobei in der chemischen Formel 1-1A und der chemischen Formel 1-1B
R¹ bis R⁶ jeweils unabhängig für Wasserstoff, eine Cyanogruppe, eine Isocyanatgruppe, eine Isothiocyanatgruppe, eine halogensubstituierte Sulfonatgruppe, eine mit einer C1- bis C5-Alkylgruppe substituierte Sulfonatgruppe, eine mit einer C1- bis C5-Fluoralkylgruppe substituierte Sulfonatgruppe, eine substituierte oder unsubstituierte C1- bis C10-Alkylgruppe, eine substituierte oder unsubstituierte C1- bis C10-Alkoxygruppe, eine substituierte oder unsubstituierte C2- bis C10-Alkenylgruppe oder eine substituierte oder unsubstituierte C2- bis C10-Alkinylgruppe steht,
wobei "substituiert" dieselbe Bedeutung aufweist, wie sie in Anspruch 1 definiert ist.

4. Wiederaufladbare Lithiumbatterie nach Anspruch 3, wobei
R³ und R⁴ der chemischen Formel 1-1A jeweils für Wasserstoff stehen, und
R⁵ und R⁶ jeweils für Wasserstoff stehen oder mindestens eines von R⁵ und R⁶ für eine Cyanogruppe, eine Isocyanatgruppe, eine Isothiocyanatgruppe, eine halogensubstituierte Sulfonatgruppe, eine mit einer C1- bis C5-Alkylgruppe substituierte Sulfonatgruppe, eine mit einer C1- bis C5-Fluoralkylgruppe substituierte Sulfonatgruppe, eine substituierte oder unsubstituierte C1- bis C10-Alkylgruppe, eine substituierte oder unsubstituierte C1- bis C10-Alkoxygruppe, eine substituierte oder unsubstituierte C2- bis C10-Alkenylgruppe oder eine substituierte oder unsubstituierte C2- bis C10-Alkinylgruppe stehen,
wobei "substituiert" dieselbe Bedeutung aufweist, wie sie in Anspruch 1 definiert ist.

5. Wiederaufladbare Lithiumbatterie nach Anspruch 1, wobei
die durch die chemische Formel 1 dargestellte Verbindung mindestens eine ist, die aus Verbindungen der Gruppe 1 ausgewählt ist:

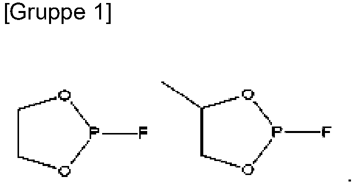

6. Wiederaufladbare Lithiumbatterie nach einem der vorhergehenden Ansprüche, wobei
die durch die chemische Formel 1 dargestellte Verbindung in einer Menge von 0,1 bis 5,0 Gewichtsteilen basierend auf 100 Gewichtsteilen der Elektrolytlösung ohne das Additiv enthalten ist.

7. Wiederaufladbare Lithiumbatterie nach einem der vorhergehenden Ansprüche, wobei
das Additiv ferner mindestens einen von anderen Additiven beinhaltet, die ausgewählt sind aus Vinylencarbonat (VC), Fluorethylencarbonat (FEC), Difluorethylencarbonat, Chlorethylencarbonat, Dichlorethylencarbonat, Bromethylencarbonat, Dibromethylencarbonat, Nitroethylencarbonat, Cyanoethylencarbonat, Vinylethylencarbonat (VEC), Adiponitril (AN), 1,3,6-Hexantricyanid (HTCN), Propensulton (PST), Propansulton (PS), Lithiumtetrafluorborat (LiBF₄), Lithiumdifluorphosphat (LiPO₂F₂) und 2-Fluorbiphenyl (2-FBP).

8. Wiederaufladbare Lithiumbatterie nach einem der vorhergehenden Ansprüche, wobei
das nicht wässrige organische Lösungsmittel kein cyclisches Carbonat beinhaltet.

9. Wiederaufladbare Lithiumbatterie nach einem der vorhergehenden Ansprüche, wobei
das nicht wässrige Lösungsmittel ein lineares Alkylcarbonat umfasst oder daraus besteht, das durch die chemische Formel 2 dargestellt ist: 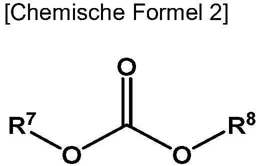
wobei in der chemischen Formel 2
R⁷ und R⁸ jeweils unabhängig eine substituierte oder unsubstituierte C1- bis C20-Alkylgruppe sind,
wobei "substituiert" dieselbe Bedeutung aufweist, wie sie in Anspruch 1 definiert ist.

10. Wiederaufladbare Lithiumbatterie nach Anspruch 9, wobei
das nicht wässrige organische Lösungsmittel ein gemischtes Lösungsmittel ist, das mindestens zwei lineare Alkylcarbonate beinhaltet, die ausgewählt sind aus der Gruppe bestehend aus Dimethylcarbonat (DMC), Diethylcarbonat (DEC), Dipropylcarbonat (DPC), Methylpropylcarbonat (MPC), Ethylpropylcarbonat (EPC) und Ethylmethylcarbonat (EMC).

11. Wiederaufladbare Lithiumbatterie nach einem der vorhergehenden Ansprüche, wobei
das kobaltfreie Lithium-Nickel-Mangan-basierte Oxid ein Lithiumverbundoxid beinhaltet, das durch die chemische Formel 4 dargestellt ist:
[Chemische Formel 4] LiₐNiₓMn_{y}M1_{z}M2_{w}O_{2-b}X_{b}
wobei in der chemischen Formel 4
0,9 ≤ a < 1,2, 0 ≤ b < 0,1, 0 ≤ w < 0,1, 0,6 ≤ x < 1,0, 0 < y < 0,4, 0 < z < 0,1, w + x + y + z = 1,
M1 mindestens ein Element ist, das aus Al, Mg, Fe, Ti, Zr, Cr, Sr, V, W, Mo, Ce und Nb ausgewählt ist,
M2 mindestens ein Element ist, das aus B, Ba, Ca und Si ausgewählt ist, und
X mindestens ein Element ist, das aus S, F und P ausgewählt ist.

12. Wiederaufladbare Lithiumbatterie nach Anspruch 11, wobei die chemische Formel 4 durch die chemische Formel 4-1 dargestellt ist:
[Chemische Formel 4-1] LiₐNiₓ₁Mn_{y1}Al_{z1}M2_{w1}O_{2-b}X_{b}
wobei in der chemischen Formel 4-1
0,9 ≤ a < 1,2, 0 ≤ b < 0,1, 0 ≤ w1 < 0,1, 0,6 ≤ x1 < 1,0, 0 < y1 < 0,4, 0 < z1 < 0,1, w1 + x1 + y1 + z1 = 1, M2 mindestens ein Element ist, das aus B, Ba, Ca und Si ausgewählt ist, X mindestens ein Element ist, das aus S, F und P ausgewählt ist.

13. Wiederaufladbare Lithiumbatterie nach Anspruch 12, wobei
in der chemischen Formel 4-1, x1 0,6 ≤ x1 ≤ 0,79 ist, y1 0,2 ≤ y1 ≤ 0,39 ist and z1 0,01 ≤ z1 < 0,1 ist.

14. Wiederaufladbare Lithiumbatterie nach einem der vorhergehenden Ansprüche, wobei
das negative Aktivmaterial mindestens eines von Graphit und Si-Verbund beinhaltet.

15. Wiederaufladbare Lithiumbatterie nach Anspruch 14, wobei
der Si-Verbund einen Kern, der Si-basierte Partikel beinhaltet, und eine Beschichtungsschicht aus amorphem Kohlenstoff beinhaltet.

## Revendications

1. Batterie rechargeable au lithium (100), comportant :
une solution électrolytique incluant un solvant organique non aqueux, un sel de lithium et un additif ;
une électrode positive (114) incluant un matériau actif positif ; et
une électrode négative (112) incluant un matériau actif négatif,
dans laquelle l'additif est un composé représenté par la Formule chimique 1, et
le matériau actif positif inclut un oxyde à base de lithium, nickel et manganèse sans cobalt : 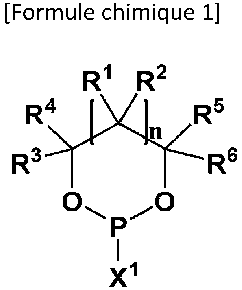
dans laquelle, dans la Formule chimique 1,
X¹ est un groupe fluoro, un groupe chloro, un groupe bromo ou un groupe iodo,
R¹ à R⁶ sont chacun indépendamment hydrogène, un groupe cyano, un groupe isocyanate, un groupe isothiocyanate, un groupe sulfonate substitué par halogène, un groupe sulfonate substitué par un groupe alkyle en C1 à C10, un groupe sulfonate substitué par un groupe fluoroakyle en C1 à C10, un groupe alkyle en C1 à C20 substitué ou non substitué, un groupe alcoxy en C1 à C20 substitué ou non substitué, un groupe alcényle en C2 à C20 substitué ou non substitué, un groupe alcynyle en C2 à C20 substitué ou non substitué, un groupe cycloalkyle en C3 à C20 substitué ou non substitué, un groupe aryle en C6 à C20 substitué ou non substitué, ou un groupe hétéroaryle en C2 à C20 substitué ou non substitué, et
n est un nombre entier de 0 ou 1 ;
dans laquelle « substitué » fait référence au remplacement de l'hydrogène d'un composé par un substituant sélectionné parmi F, Br, Cl ou I, un groupe hydroxy, un groupe nitro, un groupe cyano, un groupe amino, un groupe azido, un groupe amidino, un groupe hydrazino, un groupe hydrazono, un groupe carbonyle, un groupe carbamyle, un groupe thiol, un groupe ester, un groupe carboxyle ou un sel de celui-ci, un groupe acide sulfonique ou un sel de celui-ci, un groupe acide phosphorique ou un sel de celui-ci, un groupe alkyle en C1 à C20, un groupe alcényle en C2 à C20, un groupe alcynyle en C2 à C20, un groupe aryle en C6 à C30, un groupe arylalkyle en C7 à C30, un groupe alcoxy en C1 à C4, un groupe hétéroalkyle en C1 à C20, un groupe hétéroarylalkyle en C3 à C20, un groupe cycloalkyle en C3 à C30, un groupe cycloalcényle en C3 à C15, un groupe cycloalcynyle en C6 à C15, un groupe hétérocycloalkyle en C2 à C20 et une combinaison de ceux-ci.

2. Batterie rechargeable au lithium selon la revendication 1, dans laquelle
la Formule chimique 1 est représentée par la Formule chimique 1-1 : 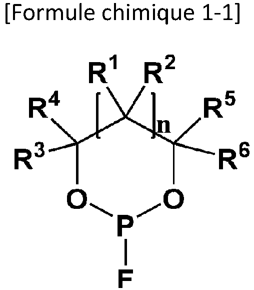
dans laquelle, dans la Formule chimique 1-1,
R¹ à R⁶ sont chacun indépendamment hydrogène, un groupe cyano, un groupe isocyanate, un groupe isothiocyanate, un groupe sulfonate substitué par halogène, un groupe sulfonate substitué par un groupe alkyle en C1 à C10, un groupe sulfonate substitué par un groupe fluoroakyle en C1 à C10, un groupe alkyle en C1 à C20 substitué ou non substitué, un groupe alcoxy en C1 à C20 substitué ou non substitué, un groupe alcényle en C2 à C20 substitué ou non substitué, un groupe alcynyle en C2 à C20 substitué ou non substitué, un groupe cycloalkyle en C3 à C20 substitué ou non substitué, un groupe aryle en C6 à C20 substitué ou non substitué, ou un groupe hétéroaryle en C2 à C20 substitué ou non substitué, et
n est un nombre entier de 0 ou 1,
dans laquelle « substitué » a la même signification que celle définie dans la revendication 1.

3. Batterie rechargeable au lithium selon la revendication 2, dans laquelle
la Formule chimique 1-1 est représentée par la Formule chimique 1-1A ou la Formule chimique 1-1B : 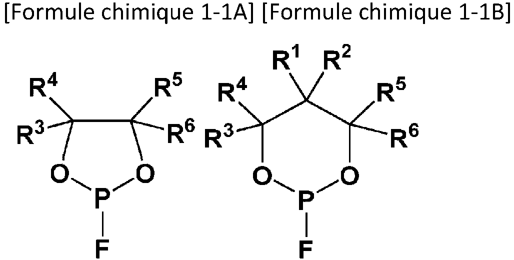
dans laquelle, dans la Formule chimique 1-1A et la Formule chimique 1-1B,
R¹ à R⁶ sont chacun indépendamment hydrogène, un groupe cyano, un groupe isocyanate, un groupe isothiocyanate, un groupe sulfonate substitué par halogène, un groupe sulfonate substitué par un groupe alkyle en C1 à C5, un groupe sulfonate substitué par un groupe fluoroakyle en C1 à C5, un groupe alkyle en C1 à C10 substitué ou non substitué, un groupe alcoxy en C1 à C10 substitué ou non substitué, un groupe alcényle en C2 à C10 substitué ou non substitué, ou un groupe alcynyle en C2 à C10 substitué ou non substitué,
dans laquelle « substitué » a la même signification que celle définie dans la revendication 1.

4. Batterie rechargeable au lithium selon la revendication 3, dans laquelle
R³ et R⁴ de la Formule chimique 1-1A sont chacun hydrogène, et
R⁵ et R⁶ sont chacun hydrogène ou au moins l'un de R⁵ et R⁶ est un groupe cyano, un groupe isocyanate, un groupe isothiocyanate, un groupe sulfonate substitué par halogène, un groupe sulfonate substitué par un groupe alkyle en C1 à C5, un groupe sulfonate substitué par un groupe fluoroalkyle en C1 à C5, un groupe alkyle en C1 à C10 substitué ou non substitué, un groupe alcoxy en C1 à C10 substitué ou non substitué, un groupe alcényle en C2 à C10 substitué ou non substitué, ou un groupe alcynyle en C2 à C10 substitué ou non substitué,
dans laquelle « substitué » a la même signification que celle définie dans la revendication 1.

5. Batterie rechargeable au lithium selon la revendication 1, dans laquelle
le composé représenté par la Formule chimique 1 est au moins l'un sélectionné parmi les composés du Groupe 1 :

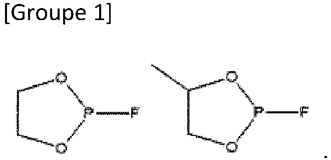

6. Batterie rechargeable au lithium selon l'une quelconque des revendications précédentes, dans laquelle
le composé représenté par la Formule chimique 1 est inclus en une quantité de 0,1 à 5,0 parties en poids sur la base de 100 parties en poids de la solution électrolytique excluant l'additif.

7. Batterie rechargeable au lithium selon l'une quelconque des revendications précédentes, dans laquelle
l'additif inclut en outre au moins l'un d'autres additifs sélectionnés parmi carbonate de vinylène (VC), carbonate de fluoroéthylène (FEC), carbonate de difluoroéthylène, carbonate de chloroéthylène, carbonate de dichloroéthylène, carbonate de bromoéthylène, carbonate de dibromoéthylène, carbonate de nitroéthylène, carbonate de cyanoéthylène, carbonate de vinyléthylène (VEC), adiponitrile (AN), succinonitrile (SN), tricyanure de 1,3,6-hexane (HTCN), propène sultone (PST), propane sultone (PS), tétrafluoroborate de lithium (LiBF₄), difluorophosphate de lithium (LiPO₂F₂) et 2-fluorobiphényle (2-FBP).

8. Batterie rechargeable au lithium selon l'une quelconque des revendications précédentes, dans laquelle le solvant organique non aqueux n'inclut pas de carbonate cyclique.

9. Batterie rechargeable au lithium selon l'une quelconque des revendications précédentes, dans laquelle le solvant non aqueux comporte ou consiste en un carbonate d'alkyle linéaire représenté par la Formule chimique 2 : 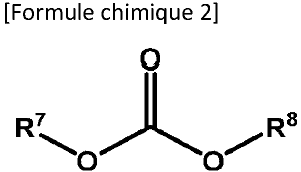
dans laquelle, dans la Formule chimique 2
R⁷ et R⁸ sont chacun indépendamment un groupe alkyle en C1 à C20 substitué ou non substitué,
dans laquelle « substitué » a la même signification que celle définie dans la revendication 1.

10. Batterie rechargeable au lithium selon la revendication 9, dans laquelle
le solvant organique non aqueux est un solvant mixte incluant au moins deux carbonates d'alkyle linéaires sélectionnés dans le groupe constitué de carbonate de diméthyle (DMC), carbonate de diéthyle (DEC), carbonate de dipropyle (DPC), carbonate de méthylpropyle (MPC), carbonate d'éthylpropyle (EPC) et carbonate d'éthylméthyle (EMC).

11. Batterie rechargeable au lithium selon l'une quelconque des revendications précédentes, dans laquelle
l'oxyde à base de lithium, nickel et manganèse sans cobalt inclut un oxyde composite de lithium représenté par la Formule chimique 4 :
[Formule chimique 4] LiₐNiₓMn_{y}M1_{z}M2_{w}O_{2-b}X_{b}
dans laquelle, dans la Formule chimique 4,
0,9 ≤ a <1,2, 0 ≤ b<0,1, 0 ≤ w<0,1, 0,6 ≤ x<1,0, 0 < y<0,4, 0 < z <0,1, w + x + y + z = 1
M1 est au moins un élément sélectionné parmi Al, Mg, Fe, Ti, Zr, Cr, Sr, V, W, Mo, Ce et Nb,
M2 est au moins un élément sélectionné parmi B, Ba, Ca et Si, et
X est au moins un élément sélectionné parmi S, F et P.

12. Batterie rechargeable au lithium selon la revendication 11, dans laquelle
la Formule chimique 4 est représentée par la Formule chimique 4-1 :
[Formule chimique 4-1] LiₐNiₓ₁Mn_{y1}Al_{z1}M2_{w1}O_{2-b}X_{b}
dans laquelle, dans la Formule chimique 4-1,
0,9 ≤ a < 1,2, 0 ≤ b < 0,1, 0 ≤ w1 < 0,1, 0,6 ≤ x1< 1,0, 0 < y1 < 0,4, 0 < z1 < 0,1, w1 + x1 + y1 + z1 = 1, M2 est au moins un élément sélectionné parmi B, Ba, Ca et Si, X est au moins un élément sélectionné parmi S, F et P.

13. Batterie rechargeable au lithium selon la revendication 12, dans laquelle
dans la Formule chimique 4-1, x1 est 0,6 ≤ x1 ≤ 0,79, y1 est 0,2 ≤ y1 ≤ 0,39 et z1 est 0,01 ≤ z1< 0,1.

14. Batterie rechargeable au lithium selon l'une quelconque des revendications précédentes, dans laquelle
le matériau actif négatif inclut au moins l'un parmi le graphite et un composite Si.

15. Batterie rechargeable au lithium selon la revendication 14, dans laquelle :
le composite Si inclut un noyau comprenant des particules à base de Si et une couche de revêtement de carbone amorphe.
